# EUROPÄISCHE PATENTSCHRIFT

(11) **EP 0 504 546 B1**
(45) Veröffentlichungstag und Bekanntmachung des Hinweises auf die Patenterteilung: **17.09.1997**
(21) Anmeldenummer: 92100688.8
(22) Anmeldetag: 16.01.1992
(51) Int. Cl.: H04L 7/02, H04L 7/10, H04L 25/03

(54) **Verfahren zur Herstellung einer Anfangssynchronisation und zur Anpassung des Empfangsfilters eines digitalen Empfängers in einem binären Basisbandübertragungssystem**
Method of establishing initial phase synchronisation and adaption of the receive filter of a digital receiver in a baseband transmission system
Méthode d'obtention initiale de la synchronisation de phase et d'adaptation du filtre de réception d'un récepteur numérique dans un système de transmission en bande de base

(30) Priorität: 18.03.1991 DE 4108806
(43) Veröffentlichungstag der Anmeldung: 23.09.1992
(73) Patentinhaber: LITEF GmbH, 79115 Freiburg (DE)
(72) Erfinder: Spahlinger, Günter, Dr.-Ing., W-7000 Stuttgart (DE); Schlenker, Erhard, D-78112 Freiburg (DE)
(74) Vertreter: Müller, Frithjof E., Dipl.-Ing.

(56) Entgegenhaltungen:
- WO-A-80/01348
- FR-A- 2 493 646
- US-A- 3 908 896

## Beschreibung

Die Erfindung betrifft ein Verfahren zur Herstellung einer Anfangssynchronisation durch eine Trainingssequenz (Präambel) vor der Übertragung von Nutzdaten und zur Anpassung eines Empfangsfilters eines digitalen Empfängers in einem binären Basisbandübertragungssystem. WO-A-80/01348 beschreibt so ein Verfahren.

Als Ausgangspunkt für die der Erfindung zugrundeliegende Problemstellung sollen binäre Daten (Digitaldaten) über einen analogen Kanal mit fester, aber unbekannter Dämpfung und unbekannten Phasenverzerrungen übertragen werden. Der Datenstrom besteht aus einer Folge von Symbolen aus dem Vorrat ("0", "1") und wird zu diesem Zweck derart moduliert, daß jedes Symbol (Bit) im Datenstrom einen Impuls gegebener, fester Form aussendet, wobei die Symbole "0" bzw. "1" den Impuls noch zusätzlich mit dem Faktor -1 bzw. +1 bewerten.

Die Impulse werden in einem festen zeitlichen Raster ausgesendet und können sich gegenseitig überlagern. Die Gesamtheit der zu übertragenden Daten bildet ein Telegramm. Dem Telegramm ist eine Präambel vorangestellt, die aus einer festgelegten Bitfolge besteht und nachfolgend auch als Trainingssequenz bezeichnet und näher beschrieben wird. Die Präambel dient dem Empfänger als Marke für den Beginn eines Telegramms.

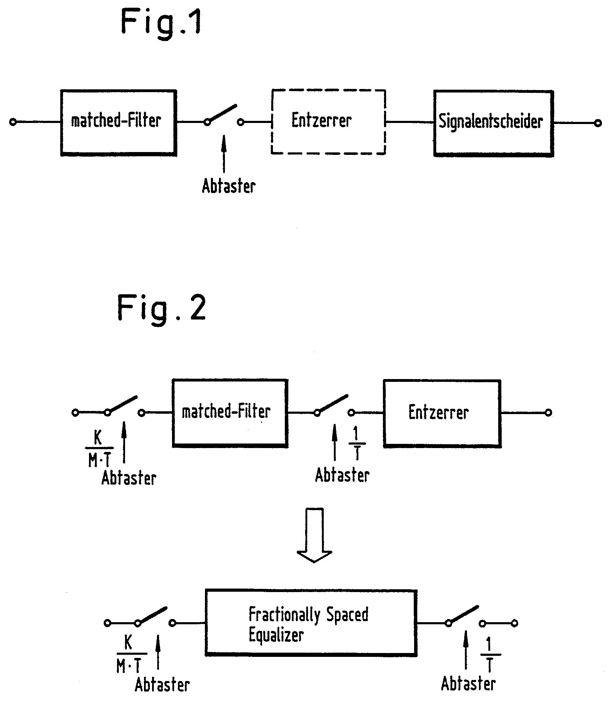

In der digitalen Datenübertragungstechnik ist der Einsatz von signalangepaßten Filtern im Empfänger bekannt. Diese sogenannten "matched"-Filter-Empfänger, in Fig. 1 der beigefügten Zeichnungen in ihrer einfachsten Form dargestellt, besitzen als Empfangsfilter ein auf das Empfangssignal angepaßtes Empfangsfilter. Am Ausgang dieses Filters wird das Signal im Zeichentakt abgetastet. Anhand der Abtastwerte führt ein Signalentscheider, eventuell nach einer zusätzlichen Entzerrung, die Signalentscheidung durch. Durch die Verwendung eines "matched"-Filters als Empfangsfilter wird, bei zeitlich richtiger Abtastung und bei überlagertem weißem Rauschen, das Signal/Rausch-Verhältnis am Eingang des Signalentscheiders maximiert.

Besitzt das Signal am Ausgang des "matched"-Filters Impulsinterferenzen, so kann mit Hilfe eines Signalentscheiders, welcher die Symbolinterferenzen in die Entscheidung mit einbezieht, ein optimaler Empfänger realisiert werden [vgl. Lit. 1 und Lit. 2].

Da diese Signalentscheider technisch sehr komplex sind, wird bei auftretenden Impulsinterferenzen in der Regel eine suboptimale Kombination von Entzerrer und Schwellwertentscheider verwendet. Durch die Entzerrung des Signals erfolgt eine Reduktion des Signal/Rausch-Verhältnisses am Eingang des Schwellwertentscheiders, was zum Verlust der Optimalität führt.

Ist der Übertragungskanal unbekannt und/oder zeitlich veränderlich, so muß eine Anpassung des Empfangsfilters und des Signalentscheiders bzw. des Entzerrers an das Empfangssignal erfolgen.

Ungerboeck [Lit. 3] hat einen Optimalempfänger vorgeschlagen, bei dem das Empfangsfilter durch Minimierung des Rauschanteils der Abtastwerte am Ausgang des Empfangsfilters an das Empfangssignal angepaßt wird. Sussman und Monsen [Lit. 4 und Lit 5] schlagen einen Empfänger vor, bei dem durch Rückkopplung des verzögerten Empfangssignals eine konstruktive Aufsummierung der Empfangsimpulse erreicht wird. Durch Korrelation des so ermittelten Empfangsimpulses mit dem Empfangssignal kann dann ein "matched"-Filter realisiert werden.

Empfänger mit adaptivem Entzerrer werden entweder mit festem Empfangsfilter und "T-Spaced Equalizer" oder als "Fractionally Spaced Equalizer", im weiteren als FSE bezeichnet, realisiert. Empfänger mit festem Empfangsfilter und adaptivem "T-Spaced Equalizer" sind empfindlich gegenüber Abweichungen des Abtasttakts vom idealen Abtastzeitpunkt. Ein FSE ist die Synthese aus einem digital realisierten "matched"-Filter und einem herkömmlichen "T-Spaced Equalizer" (Entzerrer, vgl. Fig. 2). Der Vorteil des FSE liegt in seiner Unempfindlichkeit gegenüber Abweichungen des Schrittakts vom idealen Abtastzeitpunkt [vgl. Lit. 6]. Eine Zusammenfassung der verschiedenen Möglichkeiten der adaptiven Entzerrer beschreibt Quereshi [vgl. Lit. 7].

Für die Funktion eines "matched"-Filter-Empfängers ist die zeitlich richtige Abtastung des Signals am Ausgang des "matched"-Filters notwendig. Um dies sicherzustellen, muß der richtige Abtastzeitpunkt aus dem Empfangssignal gewonnen werden. Bei der Zeichensynchronisation können zwei Betriebszustände unterschieden werden. Zum einen der Zustand zu Beginn einer Datenübertragung, in dem keine Synchronisation vorhanden ist, und zum anderen der Zustand, wenn Synchronisation erreicht ist und lediglich kleine Schwankungen ausgeglichen werden müssen. Bei fehlender Synchronisation können keine Nutzdaten empfangen werden, da die Fehlerrate des Entscheiders zu hoch ist. Aus diesem Grund wird die Einstellung der Zeichensynchronisation im allgemeinen während des Empfangs einer bereits oben erwähnten Trainingssequenz durchgeführt. Ein Einstellung eines eventuell vorhandenen Entzerrers kann erst nach erreichter Zeichensynchronisation erfolgen, was wiederum mit Hilfe einer Trainingssequenz geschieht [vgl. Lit. 8]. Die Ausnahme bildet der FSE, bei dem die Zeichensynchronisation automatisch bei der Einstellung des Entzerrers erfolgt.

Der Erfindung liegt die Aufgabe zugrunde, ein Verfahren bzw. ein System zur Herstellung der Anfangssynchronisation und zur Demodulation von Signalen vorzustellen, die durch lineare Überlagerung äquidistanter Impulse beliebiger, aber fester Form und mit von den modulierten binären Daten abhängigem Vorzeichen entstanden sind, wobei mit einer einfach aufgebauten kurzen Trainingssequenz und einem vergleichsweise einfachen Signalprozessor käuflicher Bauart ausgekommen werden soll.

Dem mit der Erfindung entwickelten Verfahren zur Anfangssynchronisation mit anschließender Demodulation liegen folgende Vorgaben zugrunde:
- Der Empfänger ist an den Übertragungskanal anzupassen;
- eine kurze einfache Trainingssequenz ist anzustreben;
- ein sicheres Erkennen des Beginns einer zu übertragenden Datensequenz muß gewährleistet sein, was gleichbedeutend ist mit dem Erkennen des Endes der Trainingssequenz;
- die Funktionsfähigkeit des Systems muß auch bei kleinem Signal/Rausch-Verhältnis des Empfangssignals gewährleistet sein;
- das einzusetzende Modem soll mittels eines vorhandenen, käuflich erwerbbaren Signalprozessors realisiert werden, was impliziert, daß die Zahl der möglichen arithmetischen Operationen je Zeiteinheit begrenzt ist.

Insbesondere aus dem letztgenannten Grund schied ein "Maximum-Likelihood-Empfänger, wie von Ungerboeck vorgeschlagen [vgl. Lit. 3], als Lösungsansatz von vornherein aus.

Aufgrund der genannten Vorgaben geht der Lösungsansatz gemäß der Erfindung von einer Empfängerstruktur mit festem Empfangsfilter, Abtaster und T-Spaced-Entzerrer aus, was den Einsatz von Trainingssequenzen zur Herstellung der Zeichensynchronisation und zur Einstellung des Entzerrers voraussetzt. Demgemäß sind im Empfänger entsprechende Algorithmen zur Zeichensynchronisation und zur Einstellung der Entzerrerkoeffizienten zu implementieren. Außerdem muß ein Algorithmus für die Erkennung der Trainingssequenzen und des Beginns der Datensequenz implementiert werden.

Es wurde gefunden, daß die benötigte Trainingssequenz dann vereinfacht werden kann, wenn ein Empfänger mit FSE eingesetzt wird, da dann keine getrennte Zeichensynchronisation mehr erforderlich ist. Nach wie vor besteht jedoch das Problem des Erkennens des Endes der Trainingssequenz. Außerdem wird der Aufwand für die Realisierung eines adaptiven Entzerrers im allgemeinen zu groß.

Die Erfindung besteht bei einem Verfahren zur Herstellung einer Anfangssynchronisation durch eine Trainingssequenz vor der Übertragung von Nutzdaten und zur Anpassung eines Empfangsfilters eines digitalen Empfängers in einem binären Basisbandübertragungssystem darin, daß
- ein als Trainingssequenz verwendeter Datenblock A mit einer Länge von k Bit eine vorgegebene Anzahl von m Bitmuster mit m ≥ 2 enthält, wobei die verwendeten Bitmuster unterschiedliche Periodendauern nᵢ haben, und wobei jedes der Bitmuster nach jeweils einer Periodendauer von nᵢ Bit die komplementäre Information beinhaltet;
- im Empfänger das Empfangssignal mit einem ganzzahligen Vielfachen L einer Schrittaktfrequenz abgetastet wird, wobei das ganzzahlige Vielfache mindestens gleich oder größer als die durch das Abtasttheorem von Nyquist bestimmte Mindestabtastfrequenz ist;
- das abgetastete Signal die Eingänge von m parallelgeschalteten Filtern beaufschlagt, die
   -- jeweils aus einer Verzögerungskette mit der Länge nᵢ x L bestehen,
   -- mit einer mit negativem Vorzeichen summierenden Rückkopplung versehen sind, wobei
   -- die Verhältnisse der m verschiedenen Rückkopplungskoeffizienten aᵢ so gewählt sind, daß die Amplitudenwerte der Abbilder am Ende der Trainingssequenz gleich groß sind;
- die Phasenlagen der Bitmuster so zueinander gewählt sind, daß sich zu einem vorgewählten Zeitpunkt nₘᵢₙ vor dem Ende der Trainingssequenz eine Koinzidenz unter den Abbildern in den Filtern ergibt, und daß
- die Abbilder in den Filtern zum Erkennen der Koinzidenz korreliert werden.

Vorteilhaft ist es, bei der Korrelation zum Erkennen von Koinzidenz als Maß für die Koinzidenz zwischen zwei Abbildern den Quotienten des Produkts der Kreuzkorrelierten der Abbilder und des Produkts der Unähnlichkeitsfaktoren zu verwenden, wobei die Unähnlichkeitsfaktoren aus der Summe der Autokorrelierten der Abbilder, jeweils über die gesamte Länge einer Verzögerungskette gebildet, vermindert um das Doppelte der Kreuzkorrelierten, erzeugt werden.

Die Korrelationen werden zweckmäßigerweise rekursiv bestimmt, wobei jeweils ein neuer Korrelationswert dadurch berechnet wird, daß das Produkt aus zwei aus der Verzögerungskette im Schrittakt herausgeschobenen Werten vom alten Korrelationswert subtrahiert wird, während das Produkt von zwei neu in die Verzögerungsketten hineingeschobenen Werten zum alten Korrelationswert addiert wird.

Für eine praktische Ausführungsform eines mit dem erfindungsgemäßen Verfahren verwirklichten Systems zur Herstellung der Anfangssynchronisation hat sich als Anzahl der periodischen Bitmuster und der Parallelfilter der Wert m = 3 als befriedigender Wert erwiesen.

Aus Aufwandsgründen wurde bei einer praktischen Erprobung der Erfindung ein "matched"-Filter-Empfänger aufgebaut, bei dem das digitale Empfangsfilter während des Empfangs einer Trainingssequenz an das Empfangssignal angepaßt wird. Dieses Empfangsfilter wird anschließend auch für die Demodulation der Datensequenz verwendet. Das Verfahren von Sussman [vgl. Lit. 4], bei dem durch konstruktive Aufsummation der im Empfangssignal enthaltenen Impulse ein "matched"-Filter erzeugt wird, eignet sich unter den obengenannten Voraussetzungen nicht, da es nur anwendbar ist, wenn keine Symbolinterferenzen im Empfangssignal vorausgesetzt werden müssen.

Mit dem neuartigen Verfahren gemäß der Erfindung zur Anfangssynchronisation ist es möglich, auch bei auftretenden Symbolinterferenzen während des Empfangs einer speziellen Trainingssequenz die Koeffizienten eines auf das Empfangssignal angepaßten digitalen Filters zu ermitteln.

Das erfindungsgemäße Verfahren zeichnet sich vor allem durch folgende Eigenschaften aus:
- Die Trainingssequenz ist einfach aufgebaut, so daß der Steueraufwand für den Verbindungsaufbau im Sender gering wird.
- Das Verfahren identifiziert selbständig den Empfang und das Ende einer Trainingssequenz.
- Während des Identifikationsvorgangs werden im Empfänger Daten aufgebaut, die zur Anpassung des Empfangsfilters an die Eigenschaften des Empfangssignals verwendet werden.
- Das Verfahren liefert gleichzeitig eine optimale Zeichensynchronisation, so daß eine zusätzliche Trainingssequenz für die Zeichensynchronisation entfallen kann.
- Die Funktionsfähigkeit des Verfahrens ist innerhalb der von der Rechengenauigkeit gegebenen Grenzen unabhängig vom Pegel des Empfangssignals.
- Das Verfahren ist auch für Empfangssignale mit kleinem Signal/Rausch-Verhältnis im Bereich von 0 dB einsetzbar.
- Während der Synchronisationsphase läuft im Empfänger ein kontinuierlicher Korrelationsvorgang ab, der auf die speziell dafür konstruierte Trainingssequenz abgestimmt und in der Weise optimiert ist, daß nur eine geringe Zahl von arithmetischen Operationen pro Zeiteinheit benötigt wird.

Die Erfindung und vorteilhafte Einzelheiten werden nachfolgend unter Bezug auf die Zeichnung in einer beispielsweise Ausführungsform näher erläutert. Es zeigen:
- Fig. 1: das stark vereinfachte, bereits erläuterte Blockschaltbild eines "matched"-Filter-Empfängers;
- Fig. 2: die ebenfalls bereits erläuterte Verbindung eines "matched"-Filters mit einem "T-Spaced"-Entzerrers zu einem "Fractionally-Spaced Equalizer" (FSE);
- Fig. 3: den Aufbau eines Datenblocks für eine Trainingssequenz beim erfindungsgemäßen Verfahren;
- Fig. 4: den schematischen Aufbau eines rekursiven Filters bei einer vorteilhaften Ausführungsform der Erfindung;
- Fig. 5: verdeutlicht die Signalabbildung in den Verzögerungsketten gemäß Fig. 4 bei Koinzidenz unter den rotierenden Abbildern vor dem Ende einer Trainingssequenz;
- Fig. 6: das Blockschaltbild einer erprobten Ausführungsform der Anordnung nach Fig. 4 mit drei rekursiven Filtern, Korrelatoren und einer nicht rückgekoppelten Verzögerungskette;
- Fig. 7: ein rekursives Filter mit einer Verzögerungskette der Länge n, Rückkoppelfaktor a und Abgriffen an Stellen n₁, n₂ und n₃ der Verzögerungskette;
- Fig. 8: einen Korrelator in schematischer Darstellung;
- Fig. 9: verdeutlicht die rekursive Kreuzkorrelation; und
- Fig. 10: den Aufbau eines Systems mit erfindungsgemäßen Merkmalen in der Demodulationsphase.

Das erfindungsgemäße Verfahren wird nachfolgend unter Bezug auf die oben kurz erläuterten Zeichnungsfiguren für den Einsatz in einem digitalen Empfänger eines binären Basisbandübertragungssystems beschrieben.

Das Verfahren ermöglicht während des Empfangs einer speziellen Trainingssequenz die Bestimmung der Koeffizienten eines auf das Empfangssignal angepaßten digitalen Filters; es führt eine Zeichensynchronisation durch und erkennt das Ende der Trainingssequenz selbständig. Nach Empfang einer Trainingssequenz steht im Empfänger ein signalangepaßtes Empfangsfilter zur Verfügung und es ist eine optimale Zeichensynchronisation gewährleistet. Wie erwähnt, funktioniert das Verfahren innerhalb praktisch vorkommender Grenzen, die durch die Rechengenauigkeit gegeben sind, unabhängig vom Pegel des Empfangssignals.

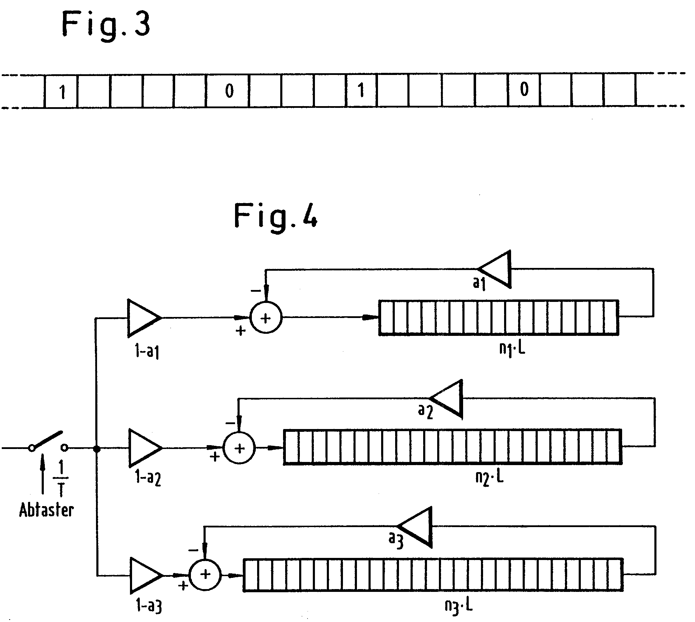

Die für das Verfahren benötigte Trainingssequenz wird vom Sender durch Absenden eines speziellen Datenblocks A erzeugt. Dies erfolgt unmittelbar vor dem Senden der zu übertragenden Nutzdaten. Der für die Trainingssequenz verwendete Datenblock A ist so aufgebaut, daß er eine bestimmte Anzahl m periodischer Bitmuster **mit unterschiedlichen Periodendauern n**_{**i**} enthält. Ein periodisches Bitmuster der Periode n ist dadurch definiert, daß ausgehend von einem bestimmten Bit des Datenblocks A jedes n-te Bit die jeweils komplementäre Information enthält (vgl. Fig. 3).

Im Empfänger wird das Empfangssignal mit einem ganzzahligen Vielfachen L der Schrittaktfrequenz abgetastet. Die Abtastfrequenz muß dabei so gewählt sein, daß das Abtasttheorem von Nyquist nicht verletzt wird. Während der Synchronisationsphase bzw. während des Verbindungsaufbaus wird dann das abgetastete Signal parallel auf die Eingänge von m rekursiven Filtern gegeben, was anhand des Beispiels der Fig. 4 für m = 3 veranschaulicht ist. Diese Filter bestehen jeweils aus einer Verzögerungskette mit einer Länge von n₁L Stufen, was einer Verzögerungszeit von jeweils nᵢ Symbolen entspricht. Die Rückkopplung erfolgt, wie dargestellt, mit negativem Vorzeichen.

Beim Empfang einer Trainingssequenz werden die zu einem periodischen Bitmuster gehörenden, durch den Übertragungskanal verzerrten Impulse im jeweiligen Filter konstruktiv aufsummiert, während die übrigen Impulse und ein dem Empfangssignal überlagertes Rauschen statistisch überlagert werden. Unter der Annahme, daß der durch den Kanal verzerrte Empfangsimpuls nennenswerte Energieanteile nur für die Dauer von n Symbolen enthält und n kleiner ist als das Minimum der Periodendauern nₘᵢₙ, bilden sich in den m Verzögerungsketten rotierende Abbilder des Empfangsimpulses aus. Die Filterkoeffizienten sind so bemessen, daß nach Empfang der Trainingssequenz die Amplitudenwerte der Abbilder gleich groß sind. Die Trainingssequenz ist so bemessen, daß Impulse, die nicht zu einem Bitmuster gehören, vom zugehörigen Filter möglichst gut unterdrückt werden.

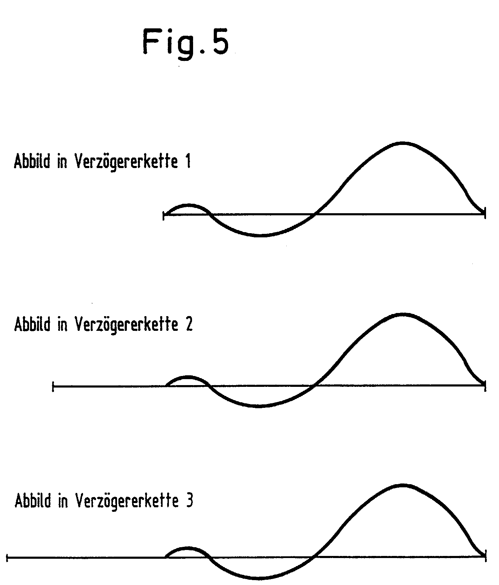

Die Phasenlagen der einzelnen Bitmuster in der Trainingssequenz zueinander sind so gewählt, daß sich genau nₘᵢₙ Symbolschritte vor dem Ende der Trainingssequenz eine Koinzidenz unter den rotierenden Abbildern in den Verzögerungsketten ergibt (vgl. Fig. 5). Dieser Zeitpunkt kann eindeutig erkannt werden, wenn die Anzahl der Symbole der Trainingssequenz kleiner ist als das kleinste gemeinsame Vielfache der Periodendauern nᵢ der periodischen Bitmuster.

Die Erkennung der Koinzidenz erfolgt mit einem Korrelationsverfahren. Als Maß für die Koinzidenz wird das Produkt aller Kreuzkorrelierten, dividiert durch das Produkt aller im folgenden definierten Unähnlichkeitsfaktoren, genommen. Die Kreuzkorrelation wird jeweils über die letzten nₘᵢₙ Symbole zweier Verzögerungsketten durchgeführt.

Der Unähnlichkeitsfaktor zwischen zwei Verzögerungsketten ergibt sich aus der Summe der beiden Autokorrelierten, die jeweils über die gesamte Länge der Verzögerungskette gebildet werden,vermindert um das Doppelte der Kreuzkorrelierten. Durch diese Verfahrensschritte wird ein Maß für die Koinzidenz ermittelt, welches unabhängig ist vom Pegel des Eingangssignals.

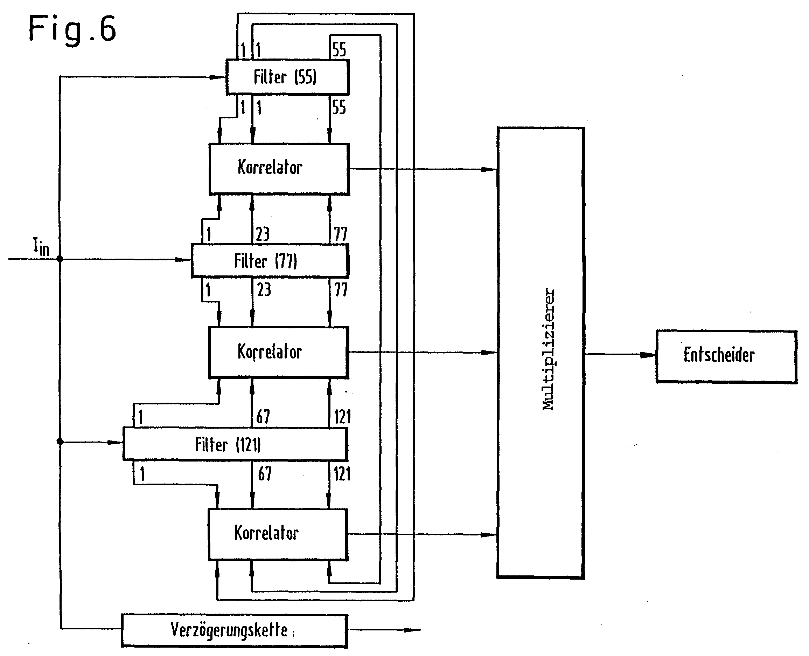

Die einzelnen Kreuzkorrelationen werden nach einem vereinfachten Verfahren bestimmt. Da die in den Verzögerungsketten (vgl. Fig. 4 und 6) umlaufenden Werte innerhalb des Korrelationsfensters parallel zueinander verschoben werden, kann die Korrelation rekursiv berechnet werden, indem das Produkt aus den beiden aus dem Korrelationsfenster herausgeschobenen Werten vom alten Korrelationswert subtrahiert wird, während das Produkt aus den beiden neu hineingeschobenen Werten addiert wird. Für die Berechnung einer Korrelation sind somit lediglich zwei Additionen und zwei Multiplikationen erforderlich.

Die Koinzidenz gilt als erkannt, wenn das oben definierte Maß für die Korrelation der Verzögerungsketteninhalte nach Überschreiten einer Schwelle ein Maximum erreicht hat, welches für die folgenden nₘᵢₙ Symbole nicht mehr überschritten wird. Nach Durchlauf der nₘᵢₙ Symbole ist das Ende der Trainingssequenz erreicht. Die Abbilder des Empfangsimpulses stehen jetzt bündig zum Eingang der Verzögerungskette. Die in den Verzögerungsketten stehenden Werte werden nun als Koeffizienten für ein digitales Empfangsfilter geladen, welches somit an das Empfangssignal angepaßt wird. Da der Koeffizientensatz des Filters zu diesem Zeitpunkt phasenrichtig zum Empfangssignal liegt, ist eine optimale Zeichensynchronisation gewährleistet.

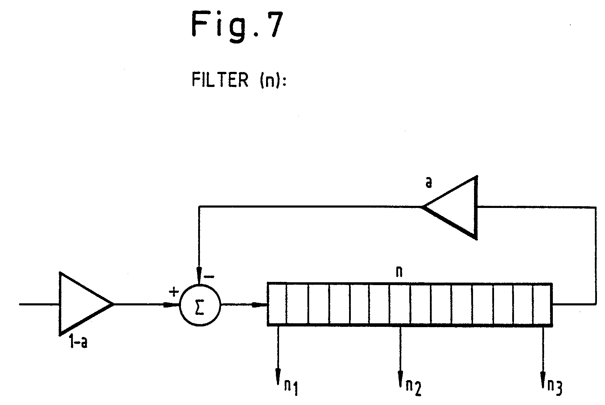

Der konkrete Schaltungsaufbau eines Systems mit erfindungsgemäßen Merkmalen für die Synchronisationsphase ist in den Fig. 6 bis 9 veranschaulicht.

Das Eingangssignal wird mit der 11-fachen Bit-Folgefrequenz abgetastet. Das abgetastete Signal Iᵢₙ wird parallel auf die Eingänge von drei rekursiven Filtern und einer rückgekoppelten Verzögerungskette gegeben (vgl. Fig. 6). Die letztere hat in der Synchronisationsphase keine Funktion. Die Filter bestehen jeweils aus einer Verzögerungskette mit einer Länge von 55, 77 bzw. 121 Stufen. Das entspricht einer Verzögerungszeit von 5,7 bzw. 11 Symbolen. Die Rückkopplung erfolgt mit negativem Vorzeichen. Auf den Eingang gelangt die durch den Kanal verzerrte Impulsfolge der Trainingssequenz (Präambel). Diese Präambel besteht aus einer Folge von 384 Bit. Die Folge enthält drei periodische Bitmuster mit Perioden der Längen 10, 14 und 22 Bit, die bei einer Verschiebung von einer halben Periode zu sich selbst komplementär sind.

In jedem der Filter bildet sich daher eine halbe Periode von den in der Präambel versteckten Mustern der oben genannten Periodendauern aus. Unter der Annahme, daß der durch den Kanal verzerrte Elementarimpuls nennenswerte Energieanteile nur für die Dauer von fünf Symbolen enthält, bilden sich in den drei Verzögerungsketten der rekursiven Filter rotierende Abbilder des verzerrten Elementarimpulses. Die drei Filter sind so bemessen, daß nach Ablauf der Präambel die Amplitudenwerte der drei Abbilder gleich groß sind (vgl. Fig. 5). Die Phasenlagen der einzelnen Bitmuster in der Präambel zueinander sind so gewählt, daß sich genau fünf Symbolschritte vor dem Ende der Präambel eine Koinzidenz unter den drei rotierenden Abbildern in den Verzögerungsketten ergibt.

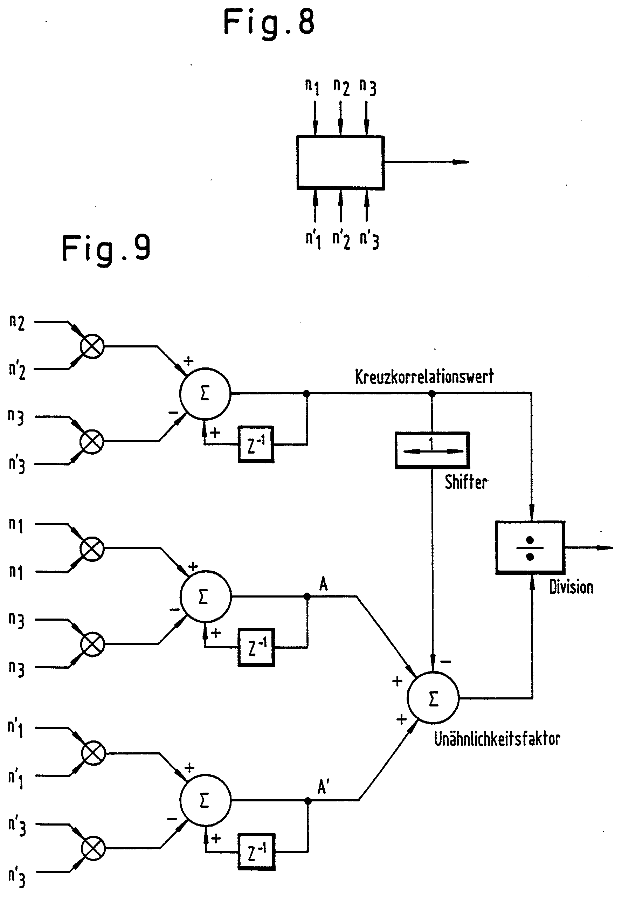

Die Koinzidenz wird durch ein Korrelationsverfahren erkannt (vgl. Fig. 9). Als Maß für die Koinzidenz wird das Produkt aus den drei möglichen Kreuzkorrelierten, dividiert durch das Produkt aus den drei möglichen, im folgenden definierten Unähnlichkeitsfaktoren genommen. Der Unähnlichkeitsfaktor zwischen den Abbildern in zwei Verzögerungsketten ergibt sich aus der Summe der beiden Autokorrelierten, vermindert um das Doppelte der Kreuzkorrelierten. Die Korrelationen werden nach einem vereinfachten Verfahren gebildet. Da die in den Verzögerungsketten umlaufenden Werte innerhalb eines Korrelationsfensters parallel zueinander durchgeschoben werden, kann die Korrelation rekursiv berechnet werden, indem das Produkt aus den beiden aus dem Fenster herausgeschobenen Werten vom alten Korrelationswert subtrahiert wird, während das Produkt aus den beiden neu hineingeschobenen Werte dazuaddiert wird. Die Koinzidenz gilt als erkannt, wenn das oben definierte Maß nach Überschreiten einer festgelegten Schwelle ein Maximum erreicht, das nach fünf weiteren Symbolen nicht mehr überschritten wird. Nach Durchlauf dieser fünf folgenden Symbole ist das Ende der Präambel (Trainingssequenz) erreicht. Die Abbilder der verzerrten Impulse stehen nun linksbündig in den drei Verzögerungsketten der Fig. 6.

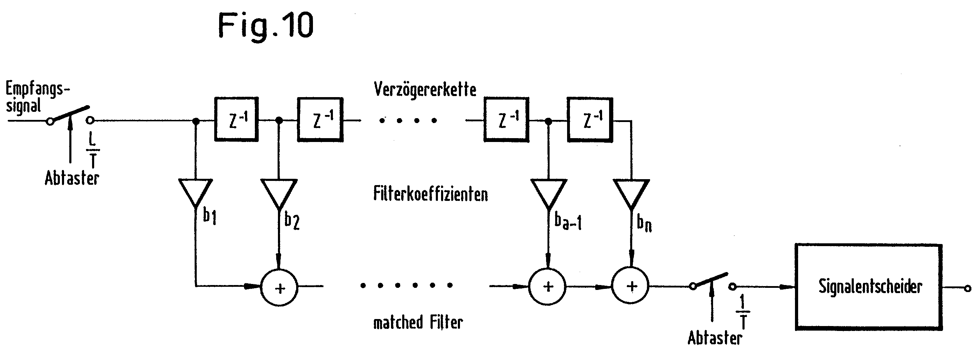

Der Aufbau des Systems in der Demodulationsphase ist in Fig. 10 veranschaulicht. Das in der Verzögerungskette der Länge 77 stehende Abbild des verzerrten Elementarimpulses wird als Koeffizientensatz für ein Transversalfilter verwendet, dessen Eingangswerte durch die nicht rückgekoppelte Verzögerungskette (vgl. Fig. 6) geschoben werden. Nach Abschluß der Synchronisationsphase steht das letzte Symbol der Präambel (Trainingssequenz) phasenrichtig zum Koeffizientensatz, so daß das nächste Symbol das erste Nutzsymbol des Telegramms ist.

Die Eigenschaften eines erfindungsgemäßen Systems lassen sich wie folgt zusammenfassen:
a) Das System kann zwei Zustände annehmen, die als Synchronisationsphase und als Demodulationsphase bezeichnet werden. Während der Synchronisationsphase identifiziert das System eine Präambel (Trainingssequenz) eines Telegramms. Sobald die Präambel detektiert ist, geht das System in die Demodulationsphase über, in der der Inhalt des Telegramms demoduliert wird.
b) In der Synchronisationsphase läuft ein kontinuierlicher Korrelationsvorgang ab, der auf die speziell dafür konstruierte Präambel oder Trainingssequenz abgestimmt ist und in der Weise optimiert ist, daß nur eine geringe Zahl von arithmetischen Operationen pro Zeiteinheit benötigt wird.
c) Das System identifiziert die Präambel oder Trainingssequenz innerhalb der von der Rechengenauigkeit gegebenen Grenzen unabhängig vom Signalpegel.
d) Störungen und Rauschen während der Übertragung der Präambel beeinträchtigen (innerhalb bestimmter Grenzen) den erfolgreichen Ablauf der Identifikation nicht.
e) Während des Identifikationsvorgangs werden im System Daten aufgebaut, die im nachfolgenden Demodulationsvorgang zur Anpassung des Systems an den Übertragungskanal verwendet werden, so daß eine jeweils spezielle Trainingsphase entfällt.
f) Am Ende der Synchronisationsphase ist automatisch das Zeitraster für den Signalentscheider, also die Symbolsynchronisation, hergestellt.
g) Während der Demodulationsphase lassen sich Phasenverzerrungen des Kanals durch ein Optimalfilter kompensieren. Gleichzeitig wird ein günstiges Verhältnis von Signalleistung zur Rauschleistung erreicht. Die Koeffizienten des Optimalfilters wurden während der Synchronisationsphase aufgebaut.

### Literaturverzeichnis:

[1] G.D. Forney, Jr. Maximum-likelihood Sequence Estimation of Digital Sequences in the Presence of Intersymbol Interference, IEEE Transactions on Information Theory, Vol. IT-18, Seiten 363-378, Mai 1972
[2] J. Huber, Detektoren und Optimalfilter für Digitalsignale mit Impulsinterferenzen, Frequenz 41 (1987), Seiten 161-167 und 189-196
[3] G. Ungerboeck, Adaptive Maximum-Likelihood Receiver for Carrier-Modulated Data-Transmission Systems, IEEE Transactions on Communications, Vol. COM-22, Seiten 624-636, Mai 1974
[4] S.M. Sussman, A Matched Filter Communication System for Multipath Channels, IRE Transactions on Information Theory, Vol. IT-6, Seiten 367-372, Juni 1960
[5] P. Monsen, Fading Channel Communications, IEEE Communications Magazine, Januar 1980, Seiten 16-25
[6] G. Ungerboeck, Fractional Tap-Spacing Equalizer and Consequences for Clock Recovery in Data Modems, IEEE Transactions on Communications, Vol. COM-24, Nr. 8, August 1976
[7] S.U.H. Quereshi, Adaptive Equalization, Proceedings of the IEEE, Vol. 73, Nr. 9, September 1985
[8] CCITT Empfehlungen, V27bis und V.27ter

## Patentansprüche

1. Verfahren zur Herstellung einer Anfangssynchronisation durch eine Trainingssequenz vor der Übertragung von Nutzdaten und zur Anpassung eines Empfangsfilters eines digitalen Empfängers in einem binären Basisbandübertragungssystem,
**dadurch gekennzeichnet,** daß
- ein als Trainingssequenz verwendeter Datenblock (A) mit einer Länge von k Bit eine vorgegebene Anzahl von m Bitmuster mit m ≥ 2 enthält, wobei die verwendeten Bitmuster unterschiedliche Periodendauern nᵢ haben, und wobei jedes der Bitmuster nach jeweils einer Periodendauer von nᵢ Bit die komplementäre Information beinhaltet,
- im Empfänger das Empfangssignal mit einem ganzzahligen Vielfachen L einer Schrittaktfrequenz abgetastet wird, wobei das ganzzahlige Vielfache mindestens gleich oder größer als die durch das Abtasttheorem von Nyquist bestimmte Mindestabtastfrequenz ist,
- das abgetastete Signal die Eingänge von m parallel geschalteten Filtern beaufschlagt, die
-- jeweils aus einer Verzögerungskette mit der Länge nᵢ·L bestehen,
-- mit einer mit negativem Vorzeichen summierender Rückkopplung versehen sind, wobei
-- die Verhältnisse der m verschiedenen Rückkopplungskoeffizienten aᵢ so gewählt sind, daß die Amplitudenwerte der Abbilder am Ende der Trainingsfrequenz gleich groß sind,
- die Phasenlagen der Bitmuster so zueinander gewählt sind, daß sich zu einem vorgewählten Zeitpunkt nₘᵢₙ vor dem Ende der Trainingssequenz eine Koinzidenz unter den Abbildern in den Filtern ergibt, und daß
- die Abbilder in den Filtern zum Erkennen der Koinzidenz korreliert werden.

2. Verfahren nach Anspruch 1, **dadurch gekennzeichnet,** daß beim Korrelieren zum Erkennen der Koinzidenz als Maß für die Koinzidenz zwischen zwei Abbildern der Quotient des Produkts der Kreuzkorrelierten der Abbilder und des Produkts der Unähnlichkeitsfaktoren verwendet wird, wobei die Unähnlichkeitsfaktoren aus der Summe der Autokorrelierten der Abbilder, jeweils über die gesamte Länge der Verzögerungskette gebildet, vermindert um das Doppelte der Kreuzkorrelierten, erzeugt werden.

3. Verfahren nach Anspruch 2, **dadurch gekennzeichnet,** daß die Korrelationen rekursiv bestimmt werden, wobei ein jeweils neuer Korrelationswert dadurch berechnet wird, daß das Produkt aus zwei aus der Verzögerungskette im Schrittakt herausgeschobenen Werten vom alten Korrelationswert subtrahiert wird, während das Produkt von zwei neu in die Verzögerungsketten hineingeschobenen Werten zum alten Korrelationswert addiert wird.

4. Verfahren nach einem der Ansprüche 1 bis 3, **dadurch gekennzeichnet,** daß die Anzahl der periodischen Bitmuster und der Parallelfilter zu m = 3 gewählt wird.

## Claims

1. A method for establishing an initial synchronization by means of a training sequence before the transmission of useful data and for matching a receive filter of a digital receiver in a binary baseband transmission system, wherein
- a datablock (A) used as training sequence, with a length of k bits contains a predetermined number of m bit patterns with m ≥ 2, the bit patterns used having different period lengths nᵢ, and each of the bit patterns containing the complementary information after in each case one period length of nᵢ bits;
- the received signal in the receiver is sampled with an integral multiple L of a signal element timing frequency, the integral multiple being at least equal to or greater than the minimum sampling frequency determined by the sampling theorem by Nyquist,
- the sampled signal is applied to the inputs of m parallel-connected filters which
-- in each case consist of a delay chain with the length nᵢ × L,
-- are provided with an additive feedback with negative sign, in which
-- the ratios of the m different feedback coefficients aᵢ are selected in such a manner that the amplitude values of the waveforms at the end of the training sequence are of equal magnitude,
- the phase angles of the bit patterns are selected with respect to one another in such a manner that a coincidence among the waveforms in the filters before the end of the training sequence at a preselected time nₘᵢₙ, and
- the waveforms in the filters are correlated for recognizing the coincidence.

2. The method as claimed in claim 1, wherein in the correlating for recognizing the coincidence, the quotient of the product of the crosscorrelative of the waveforms and of the product of the dissimilarity factors is used as a measure of the coincidence between two waveforms, the dissimilarity factors being formed from the sum of the autocorrelative of the waveforms, formed in each case over the entire length of the delay chain, reduced by twice the crosscorrelative.

3. The method as claimed in claim 2, wherein the correlations are determined recursively, a new correlation value in each case being calculated by subtracting the product of two values shifted out of the delay chain with the signal element timing from the old correlation value while adding the product of two values newly shifted into the delay chains to the old correlation value.

4. The method as claimed in one of claims 1 to 3, wherein the number of the periodic bit patterns and of the parallel filters is selected as m = 3.

## Revendications

1. Procédé d'obtention d'une synchronisation initiale par une séquence d'entraînement avant la transmission de données utiles, et d'adaptation d'un filtre de réception d'un récepteur numérique dans un système de transmission en bande de base,
**caractérisé en ce** que
- un bloc de données (A) d'une longueur de k bits utilisé comme séquence d'entraînement contient un nombre prédéterminé de m profils binaires avec m ≥ 2, les profils binaires utilisés ayant des durées de période nᵢ variables, et chacun des profils binaires contenant après respectivement une durée de période de nᵢ bits, l'information complémentaire,
- dans le récepteur, le signal de réception est exploré avec un multiple entier L d'une fréquence d'impulsions de synchronisation, le multiple entier étant au moins égal ou supérieur à la fréquence d'échantillonnage définie par le théorème de balayage de Nyquist,
- le signal analysé est transmis aux entrées de m filtres montés en parallèle, lesquels
-- sont constitués chacun par une ligne de retard de la longueur nᵢ ^{.} L,
-- équipés d'une rétroaction totalisant avec le signe négatif,
-- les rapports des m coefficients de rétroaction aᵢ différents étant choisis de telle façon que les valeurs d'amplitude des images sont égales à la fin de la fréquence d'entraînement,
- les positions de phase des profils binaires les unes par rapport aux autres sont choisies de manière qu'à un instant nₘᵢₙ prédéterminé avant la fin de la séquence d'entraînement, on obtient une coïncidence entre les images dans les filtres, et que
- les images dans les filtres sont corrélées pour la reconnaissance de la coïncidence.

2. Procédé selon la revendication 1, caractérisé en ce que lors de la corrélation pour la reconnaissance de la coïncidence comme critère pour la coïncidence entre deux images, on utilise le quotient du produit des images à corrélation croisée par le produit des facteurs de dissemblance, les facteurs de dissemblance étant produits à partir de la somme des images autocorrélées formées respectivement sur toute la longueur de la ligne de retard, diminuée du double des images à corrélation croisée.

3. Procédé selon la revendication 2, caractérisé en ce que les corrélations sont déterminées de manière récursive, une nouvelle valeur de corrélation étant respectivement calculée en déduisant de l'ancienne valeur de corrélation le produit de deux valeurs expulsées de la ligne de retard au rythme de l'impulsion de synchronisation, alors que le produit de deux valeurs nouvellement introduites dans les lignes de retard est additionné à l'ancienne valeur de corrélation.

4. Procédé selon l'une des revendications 1 à 3, caractérisé en ce que le nombre des profils binaires périodiques et des filtres parallèles est choisi comme étant de m = 3.
